# EUROPÄISCHE PATENTSCHRIFT

(11) **EP 2 841 790 B1**
(45) Veröffentlichungstag und Bekanntmachung des Hinweises auf die Patenterteilung: **11.07.2018**
(21) Anmeldenummer: 13713731.1
(22) Anmeldetag: 27.02.2013
(51) Int. Cl.: F16F 1/379

(54) **AGGREGATELAGER**
ASSEMBLY MOUNT
PALIER D'UNITÉ

(30) Priorität: 25.04.2012 DE 102012008386
(43) Veröffentlichungstag der Anmeldung: 04.03.2015
(73) Patentinhaber: TrelleborgVibracoustic GmbH, 64293 Darmstadt (DE)
(72) Erfinder: HETTLER, Werner, 68309 Mannheim (DE); MUTH, Marion, 68647 Biblis (DE); SIMUTTIS, Arnold, 55545 Bad Kreuznach (DE)
(74) Vertreter: Flügel Preissner Schober Seidel
(86) Internationale Anmeldenummer: PCT/EP2013/000582
(87) Internationale Veröffentlichungsnummer: WO 2013/159850

(56) Entgegenhaltungen:
- EP-A2- 2 306 044
- DE-A1- 2 328 647

## Beschreibung

### Technisches Gebiet

Die Erfindung betrifft ein Aggregatelager, umfassend ein Traglager, ein Auflager und einen Federkörper aus einem gummielastischen Werkstoff, wobei das Traglager zumindest eine erste Anbindungsfläche, das Auflager zumindest eine zweite Anbindungsfläche und der Federkörper zumindest eine dritte und zumindest eine vierte Anbindungsfläche aufweisen, wobei die erste Anbindungsfläche des Traglagers mit der dritten Anbindungsfläche des Federkörpers und die zweite Anbindungsfläche des Auflagers mit der vierten Anbindungsfläche des Federkörpers verbunden sind, und wobei das Auflager mit einem Gehäuse verbunden ist, wobei das Gehäuse topfförmig ausgebildet ist und das Traglager mit Abstand relativ schwingfähig umschließt.

### Stand der Technik

Derartige Aggregatelager sind allgemein bekannt, zum Beispiel aus der DE 10 2010 027 169 A1. Das Traglager besteht dabei aus einem Kunststoff, der um einen Gewindebolzen gespritzt ist. Dabei wurden Traglager aus metallischen Werkstoffen, ganz besonders aus Aluminium, als nachteilig erkannt, weil dadurch Motorwärme besonders gut in das Aggregatelager und damit zum Federkörper gelangt. Die Beaufschlagung der Anbindungsflächen des Federkörpers und des Traglagers mit hohen Temperaturen kann zu einer reduzierten Lebensdauer des Aggregatelagers führen.

Aus der DE 103 07 680 A1 ist ein weiteres Aggregatelager bekannt, das als Hydrolager ausgebildet ist und ein Traglager und ein Auflager umfasst, die durch einen Federkörper aus einem gummielastischen Werkstoff aufeinander abgestützt sind. Der Federkörper besteht aus einem temperaturbeständigen Silikon und weist auf der dem Arbeitsraum zugewandten Seite eine Schutzschicht aus einem gegen die Dämpfungsflüssigkeit resistenten und von der Dämpfungsflüssigkeit undurchdringbaren Werkstoff auf. Dadurch, dass der Federkörper aus Silikon besteht, kann das vorbekannte Hydrolager bei Temperaturen deutlich oberhalb von 150 °C betrieben werden. Die Schutzschicht ist vorgesehen, weil Silikonwerkstoffe häufig nicht gegen Dämpfungsflüssigkeit beständig sind, die sich innerhalb des Arbeitsraums von Hydrolagern befindet. Die Schutzschicht bewirkt außerdem, dass ein Hindurchdiffundieren der Dämpfungsflüssigkeit durch den Federkörper verhindert wird.

Federkörper aus Silikon, entsprechend dem Stand der Technik, haben außerdem ungünstigere akustische Eigenschaften als Federkörper aus Naturkautschuk oder Isoprenkautschuk.

Aus DE 23 28 647 geht ein Gummimetalllager hervor, das ein Lagergehäuse, ein Lagermittelteil und einen das Lagergehäuse und das Lagermittelteil miteinander verbindenden elastischen Gummifederkörper aufweist. Sowohl das Lagergehäuse als auch das Lagermittelteil sind mit ringförmigen Kühltaschen versehen, die einen Kühlwassereintritt und einen Kühlwasseraustritt umfassen. Das Gummimetalllager kann an einen Kühlmittelkreislauf, insbesondere den Kühlmittelkreislauf der Brennkraftmaschine, angeschlossen werden.

### Darstellung der Erfindung

Der Erfindung liegt die Aufgabe zugrunde, ein Aggregatelager der vorbekannten Art derart weiterzuentwickeln, dass Federkörper ohne Nachteile bezüglich ihrer Funktion und/oder Haltbarkeit auch dann, wenn sie nicht aus Silikon bestehen, zur Anwendung gelangen können, insbesondere dann, wenn das Aggregatelager in einem Umfeld mit Dauertemperaturen von über 100 °C betrieben wird.

Diese Aufgabe wird erfindungsgemäß mit den Merkmalen von Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist es vorgesehen, dass die erste Anbindungsfläche des Traglagers und die dritte Anbindungsfläche des Federkörpers und/oder die zweite Anbindungsfläche des Auflagers und die vierte Anbindungsfläche des Federkörpers durch eine Flüssigkeitskühlung flüssigkeitsgekühlt ausgebildet sind, wobei das Traglager und/oder das Gehäuse doppelwandig ausgebildet sind, und wobei die doppelten Wände eine mit einem Kühlmittel gefüllte Kühlmittelkammer begrenzen, durch die die Flüssigkeitskühlung gebildet ist, wobei das Traglager und/oder das Gehäuse jeweils zwei Kühlmittelanschlüsse aufweisen, wobei einer der Kühlmittelanschlüsse als Kühlmittelzulauf und einer der Kühlmittelanschlüsse als Kühlmittelablauf ausgebildet ist und wobei die Kühlmittelanschlüsse in die Kühlmittelkammer von Traglager und/oder Gehäuse münden und wobei innerhalb der Kühlmittelkammern Stützrippen zu deren Aussteifung und zur Führung des Kühlmittels angeordnet sind.
Hierbei ist von Vorteil, dass unerwünscht hohe Temperaturen, die die Funktion des Aggregatelagers und/oder dessen Haltbarkeit beeinträchtigen könnten, von allen funktionsrelevanten Bauteilen des Aggregatelagers, wie zum Beispiel vom Traglager, vom Auflager und vom Federkörper, ferngehalten werden. Durch die Flüssigkeitskühlung kann dabei erreicht werden, dass die Betriebstemperaturen des Aggregatelagers idealerweise ≤ 80 °C, maximal 90 °C sind.

Die Betriebstemperaturen des Aggregatelagers können zum Beispiel im Bereich von 60 °C stabilisiert werden, obwohl im Umfeld des Aggregatelagers Dauertemperaturen von bis zu 150 °C und mehr herrschen.

Das Gehäuse hält Wärme infolge von Strahlung, ausgehend vom Motor und besonders von der Abgasanlage einschließlich vom Abgasturbolader vom inneren des Aggregatelagers, insbesondere vom Federkörper, fern.

Die Kühlmittelkammern, die Kühlmittelzuläufe und die Kühlmittelabläufe bilden Bestandteile eines Kühlmittelkreislaufs, wobei eine Kühlmittelpumpe, zum Beispiel im Fahrzeug, eine Zirkulation des Kühlmittels durch das Flüssigkeitskühlsystem bewirkt. In Abhängigkeit vom jeweiligen Anwendungsfall kann in das Flüssigkeitskühlsystem zusätzlich ein Kühler integriert sein. Auch dann, wenn am Traglager oder am Motortragarm, der mit dem Traglager des Aggregatelagers verbunden ist, Temperaturen zwischen 150 und 200 °C herrschen, kann durch einen solchen Kühlkreislauf die Betriebstemperatur des Aggregatelagers deutlich unter 80 °C, zum Beispiel im Bereich um 60 °C, stabilisiert werden.

Der Federkörper weist durch die nur unkritischen Temperaturen, denen er ausgesetzt ist, auch dann, wenn er aus einem elastomeren Werkstoff, zum Beispiel Naturkautschuk, besteht, gleichbleibend gute Gebrauchseigenschaften während einer langen Gebrauchsdauer auf.

Durch eine derartige Ausgestaltung nimmt die Kühlflüssigkeit durch einen langen Weg an den Stützrippen entlang viel Wärme auf, um zu verhindern, dass die Wärme aus der Umgebung des Aggregatelagers an die Anbindungsflächen des Federkörpers und an den Federkörper selbst gelangt und dadurch schädigt. Durch die Stützrippen zirkuliert die Kühlflüssigkeit mäanderförmig durch das Aggregatelager. Die Aussteifung der Kühlmittelkammern durch die Stützrippen ist von Vorteil, um auftretende Kräfte verformungsfrei aufnehmen zu können.

Gemäß einer vorteilhaften Ausgestaltung kann es vorgesehen sein, dass der Federkörper aus einem elastomeren Werkstoff besteht. Elastomere Werkstoffe haben im Gegensatz zu Silikon-Werkstoffen den Vorteil, dass dadurch kompliziert gestaltete Federkörper für Aggregatelager hergestellt werden können, mit in allen Raumrichtungen unterschiedlichen Federraten durch gebundene Zwischenringe, Membranen und Rollbälge. Die Federkörper aus elastomerem Werkstoff weisen, im Gegensatz zu Federkörpern aus Silikon-Werkstoffen, verbesserte Komfort- und Akustikeigenschaften auf. Einer separaten Schutzschicht, die das Hindurchdiffundieren von Dämpfungsflüssigkeit verhindert, bedarf es nicht, und auch die Werkstoffeigenschaften, zum Beispiel die Weiterreißfestigkeit, sind bei Federkörpern aus einem elastomeren Werkstoff besser, als bei Federkörpern aus Silikon. Die gezielte Kühlung des gesamten schwingungstechnischen Funktionsbereichs des Aggregatelagers auf Temperaturen unter 80 °C erlaubt die uneingeschränkte Verwendung elastomerer Werkstoffe, die bisher aus Temperaturgründen ausgeschlossen waren. Elastomere Werkstoffe können Verwendung finden, die dynamisch weniger verhärten und auch dauerhaltbarer sind, als die bisher verwendeten Elastomerwerkstoffe in Aggregatelagern ohne Flüssigkeitskühlung. Damit kann die Isolationswirkung der Lager gegen Körperschall und Vibrationen zusätzlich verbessert werden. Gleichzeitig wird das Langzeitsetzen reduziert und teure stabilisierende Elastomerkomponenten, die langfristig das Lager verhärten, werden durch die Flüssigkeitskühlung nicht mehr in gleichem Maße nötig oder können durch kostengünstigere, weniger wirksame ersetzt werden.

Das Traglager und das Auflager können aus einem metallischen Werkstoff bestehen. Metallische Werkstoffe sind für solche Anwendungsfälle ausgezeichnet bewährt, weisen eine gute Festigkeit auf und sind kostengünstig verfügbar. Durch die Flüssigkeitskühlung besteht nicht mehr die Notwendigkeit, das Traglager und/oder das Auflager aus einem polymeren Werkstoff herzustellen, um zu verhindern, dass unerwünschte hohe Temperaturen in das Aggregatelager eingeleitet werden.

Nach einer vorteilhaften Ausgestaltung kann es vorgesehen sein, dass der durch den Abstand gebildete Spalt von einem Schutzbalg überdeckt ist und dass der Schutzbalg das Traglager und das Gehäuse dichtend anliegend berührt. Durch das Gehäuse und den Schutzbalg ist das Innere des Aggregatelagers vollständig gekapselt und dadurch vor Wärme infolge von Strahlung aus der Umgebung des Aggregatelagers geschützt. Die Kühle im Aggregatelager, bedingt durch die Flüssigkeitskühlung, wird durch den Schutzbalg im Aggregatelager zurückgehalten.

Der Schutzbalg kann aus einem gummielastischen Werkstoff bestehen, der bis zu zumindest 150 °C temperaturbeständig ist.

Der Schutzbalg kann aus Silikon oder EPDM mit hellgrauem Füllstoff bestehen. Durch den hellgrauen Füllstoff wird Wärme besonders gut reflektiert und die Wärmebeständigkeit ist hoch. Die offenen Bereiche des Aggregatelagers, die für die Beweglichkeit des Aggregatelagers nötig sind, werden von dem dünnen flexiblen Schutzbalg aus dem temperaturbeständigen Werkstoff verschlossen. Der Schutzbalg verhindert nicht nur, dass Wärme aus der Umgebung ins Innere des Aggregatelagers eindringt, sondern sorgt auch dafür, dass Kühle im Inneren des Aggregatelagers nicht durch offene Bereiche in die warme Umgebung austritt. Die Kühlung des Inneren des Aggregatelagers, insbesondere des Federkörpers, wird durch den Schutzbalg begünstigt.

Die besten Gebrauchseigenschaften des Aggregatelagers werden erreicht, wenn das Traglager und das Gehäuse jeweils doppelwandig ausgebildet sind und dadurch jeweils eine Kühlmittelkammer begrenzt wird, wobei die Kühlmittelkammern Bestandteil der Flüssigkeitskühlung sind. Die Anbindungsflächen, mit denen der Federkörper am Traglager und am Auflager festgelegt ist, werden dadurch jeweils besonders wirkungsvoll gekühlt, so dass insbesondere diese beiden kritischen Bereiche des Federkörpers während der bestimmungsgemäßen Verwendung des Aggregatelagers völlig unkritische Betriebstemperaturen von deutlich unter 80 °C aufweisen. Die Lagerbetriebstemperaturen können dauerhaft im Bereich um 60 °C stabilisiert werden, auch dann, wenn das Aggregatelager in der Nähe einer Verbrennungskraftmaschine, einer Abgasanlage oder eines Abgasturboladers angeordnet ist.

Im Gegensatz zu Federkörpern aus Silikon weisen Federkörper aus elastomeren Werkstoffen ein deutlich besseres Verhalten bei akustischer Isolation auf, können - ohne die erfindungsgemäße Flüssigkeitskühlung - jedoch nur Dauer-Temperaturen bis etwa 100 °C vertragen, ohne dass deren Haltbarkeit drastisch verringert wird.

Sollen die guten Gebrauchseigenschaften von Federkörpern aus elastomerem Werkstoff in Aggregatelagern zum Tragen kommen, ist es insbesondere dann, wenn um das Aggregatelager herum Temperaturen von mehr als 100 °C herrschen, unbedingt erforderlich, dass diese Aggregatelager zum Schutz des Federkörpers durch die erfindungsgemäße Flüssigkeitskühlung gekühlt werden. Dadurch können Elastomerwerkstoffe für den Federkörper des Aggregatelagers zur Anwendung gelangen, die bisher aus Temperaturgründen ausgeschlossen waren. Darunter sind auch solche Elastomerwerkstoffe, die dynamisch wenig verhärten und auch dauerhaltbar sind.

Die Kühlmittelkammern von Traglager und/oder Gehäuse sind bevorzugt kontinuierlich vom Kühlmittel durchströmbar. Dadurch wird sichergestellt, dass auf dem Weg durch das Aggregatelager erwärmtes Kühlmittel kontinuierlich aus dem Aggregatelager herausgeführt und durch gekühltes Kühlmittel ersetzt wird. Diese kontinuierliche Zirkulation durch das Aggregatelager bewirkt, dass
das Verhältnis der Temperaturen außerhalb des Aggregatelagers zu den Temperaturen innerhalb des Aggregatelagers zumindest 2, bevorzugt 3, beträgt. Der temperaturempfindliche Federkörper kann dadurch weitgehend unabhängig von der Höhe der Umgebungstemperaturen um das Aggregatelager stets in einem Temperaturbereich betrieben werden, in dem seine Gebrauchseigenschaften und seine Haltbarkeit besonders gut sind.

Das Aggregatelager kann als Hydrolager ausgebildet sein. Hydrolager sind allgemein bekannt und gelangen zum Beispiel zur Abstützung von Verbrennungskraftmaschinen in Kraftfahrzeugen zur Anwendung.

Das Aggregatelager, das als Hydrolager ausgebildet ist, weist ein Traglager, ein Auflager und einen Federkörper auf, wobei das Traglager, das Auflager und der Federkörper einen Arbeitsraum und einen Ausgleichsraum begrenzen, die mit Dämpfungsflüssigkeit gefüllt sind und die durch eine Trennwand räumlich voneinander getrennt und flüssigkeitsleitend miteinander verbunden sind, wobei die Trennwand durch einen Düsenkäfig mit oberer und unterer Düsenscheibe gebildet ist, wobei zur Isolierung höherfrequenter kleinamplitudiger Schwingungen im Düsenkäfig axial zwischen den Düsenscheiben eine Membran schwingfähig angeordnet ist, wobei der Arbeitsraum und der Ausgleichsraum zur Dämpfung tieffrequenter großamplitudiger Schwingungen durch einen Dämpfungskanal flüssigkeitsleitend miteinander verbunden sind und wobei der Ausgleichsraum auf der der Trennwand axial abgewandten Seite durch eine im Wesentlichen drucklos Volumen aufnehmende gummielastische Abschlussmembran begrenzt ist. Der hinsichtlich einer Beaufschlagung mit hohen Temperaturen kritische Bereich des Aggregatelagers ist der Federkörper, insbesondere dessen Anbindungsflächen zu Traglager und Auflager. Um möglichst gute Gebrauchseigenschaften des Aggregatelagers hinsichtlich einer akustischen Isolation und möglichst gleichbleibend guter Gebrauchseigenschaften während einer langen Gebrauchsdauer sicherzustellen, ohne dass während der Gebrauchsdauer eine unerwünschte dynamische Verhärtung des Aggregatelagers eintritt, ist von Vorteil, wenn der Werkstoff, aus dem der Federkörper besteht, praktisch unabhängig von dessen Temperaturbeständigkeit ausgewählt werden kann. Bei dem erfindungsgemäßen Aggregatelager ist das durch die Flüssigkeitskühlung der Fall. Durch die Flüssigkeitskühlung wird erreicht, dass im Inneren des Aggregatelagers stets für den Federkörper und dessen Anbindungsflächen unkritische Temperaturen herrschen, zum Beispiel etwa 60 °C.
Aus Gründen der Temperaturbeständigkeit ist es also nicht mehr nötig, auf hochtemperaturbeständige Werkstoffe für den Federkörper auszuweichen, bei denen zugunsten der Dauerhaltbarkeit Kompromisse bei den Gebrauchseigenschaften des Aggregatelagers und/oder dessen mechanischer Haltbarkeit gemacht werden müssen.
Trotz der möglichen hohen Umgebungstemperaturen um das Aggregatelager ist durch die Flüssigkeitskühlung die Verwendung eines Federkörpers zum Beispiel aus Silikon nicht mehr erforderlich.

Das Traglager und/oder das Auflager können durch ein Verbundgussteil gebildet sein. Durch eine solche Ausgestaltung kann der Wärmeeintrag in das Aggregatelager weiter reduziert werden. Das Verbundgussteil umfasst einen inneren Kern, der als Mutter aus Metall ausgebildet ist, wobei der innere Kern von einer gegossenen äußeren Schale aus Kunststoff, zum Beispiel Polyamid, umschlossen ist. Der Kunststoff dient zur Wärmedämmung, während der innere Kern der Übertragung großer Kräfte dient. Durch den inneren Kern aus einem metallischen Werkstoff werden Kräfte vom Kunststoff ferngehalten.

Das Traglager kann eine metallische Mutter umfassen, die von einer Außenschale zur Begrenzung der Kühlmittelkammer umschlossen ist, wobei die Außenschale aus einem polymeren Werkstoff besteht.

Die metallische Mutter kann als Eingießmutter ausgebildet sein. Dadurch weist das Aggregatelager einen teilearmen Aufbau auf und die Montage des Aggregatelagers ist vereinfacht. Die erste Anbindungsfläche des Traglagers und/oder die zweite Anbindungsfläche des Auflagers können aus einem polymeren Werkstoff, zum Beispiel aus Polyamid bestehen, wobei solche Anbindungsflächen die Wärmeübertragung in den Federkörper und dessen Anbindungsflächen minimieren und dadurch die Wirksamkeit der Flüssigkeitskühlung unterstützen.

Die Mutter kann von einer Wärmeisolationsscheibe als Unterlage für eine zur Anwendung gelangende Befestigungsschraube überdeckt sein. Mittels der Befestigungsschraube kann ein Motortragarm mit dem Traglager verbunden werden. Durch die Wärmeisolationsscheibe wird ein unmittelbarer Kontakt des Motortragarms mit dem Traglager verhindert. Auch dann, wenn das Traglager aus einem metallischen Werkstoff besteht, wird der Wärmeeintrag vom Motortragarm ins Innere des Aggregatelagers durch die Wärmeisolationsscheibe minimiert.

Die Wärmeisolationsschreibe kann als Glimmerscheibe ausgebildet sein. Durch die Verwendung einer Glimmerscheibe kann der Wärmeeintrag in das Aggregatelager einfach und kostengünstig reduziert werden. Eine solche Glimmerscheibe kann eine Dicke aufweisen, die bevorzugt 1 mm bis 3 mm beträgt, wobei eine dünne Glimmerscheibe hinreichend druckstabil ist, so dass bei der Befestigung des Motortragarms an dem Traglager kein Vorspannungsverlust der Schraubenverbindung entsteht.

### Kurzbeschreibung der Zeichnung

Sieben Ausführungsbeispiele eines erfindungsgemäßen Aggregatelagers werden nachfolgend anhand der Fig. 1 bis 9 näher beschrieben. Diese zeigen jeweils in schematischer Darstellung:
- Fig. 1: ein erstes Ausführungsbeispiel des Aggregatelagers mit einer Rundum-Kühlung, das heißt einer Kühlung des Traglagers und einer Kühlung des Auflagers;
- Fig. 2: ein zweites Ausführungsbeispiel des Aggregatelagers, das eine partielle Kühlung im Bereich des Federkörpers aufweist;
- Fig. 3: ein drittes Ausführungsbeispiel des Aggregatelagers, wobei das Traglager durch ein Verbundgussteil gebildet ist und die Kühlung nur in dem doppelwandigen Gehäuse erfolgt;
- Fig. 4: ein viertes Ausführungsbeispiel des Aggregatelagers, ähnlich dem Aggregatelager aus Fig. 3, wobei das Traglager vollständig aus einem metallischen Werkstoff besteht und wobei das Aggregatelager und ein hier nicht dargestellter Motortragarm unter Zwischenfügung einer Wärmeisolationsscheibe miteinander verbunden sind;
- Fig. 5: ein fünftes Ausführungsbeispiel des Aggregatelagers in Upside-Down-Anordnung, wobei das Traglager mit einer Karosserie und das Auflager mit einem Motortragarm verbunden ist;
- Fig. 6 und 7: ein sechstes Ausführungsbeispiel des Aggregatelagers, das als gekühltes Gummi-Metall-Kastenlager ausgebildet ist, in quer- und längsgeschnittener Darstellung;
- Fig. 8 und 9: ein siebtes Ausführungsbeispiel eines Aggregatelagers, das als Hydro-Kastenlager quer- und längsgeschnitten dargestellt ist.

### Ausführung der Erfindung

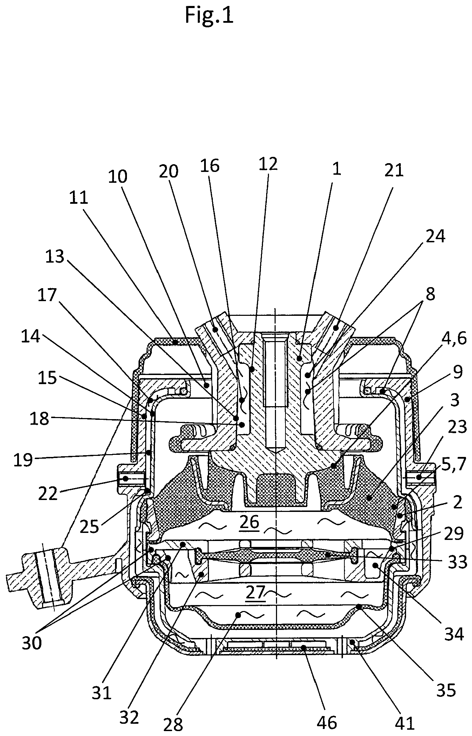

Die in den Fig. 1 bis 9 dargestellten Aggregatelager umfassen alle ein Traglager 1 und ein Auflager 2, die durch einen Federkörper 3 aufeinander abgestützt sind. Der Federkörper 3 besteht in jedem der Ausführungsbeispiele aus einem elastomeren Werkstoff. Der Federkörper 3 hat eine dritte Anbindungsfläche 6, mit der er an der ersten Anbindungsfläche 4 des Traglagers festgelegt ist und eine vierte Anbindungsfläche 7, durch die er mit der zweiten Anbindungsfläche 5 des Auflagers 2 verbunden ist.
In jedem der Ausführungsbeispiele ist eine Flüssigkeitskühlung 8 zur Kühlung des Federkörpers 3 und dessen Anbindungsflächen 6, 7 vorgesehen.

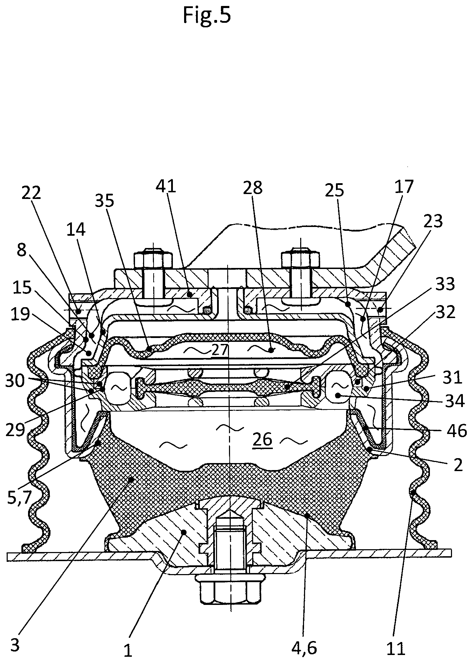

Ziel der Erfindung ist, dass der Federkörper 3 hinsichtlich seiner Gestalt und seines Materials optimal an die jeweiligen Gegebenheiten des Anwendungsfalles angepasst werden kann. Insbesondere soll der Federkörper 3 gleichbleibend gute Gebrauchseigenschaften während einer langen Gebrauchsdauer aufweisen. Die Höhe der Temperaturen in der Umgebung des Aggregatelagers und/oder die Höhe der Temperaturen des Motortragarms, der in den Fig. 1 bis 4 und 6 bis 9 mit dem Traglager 1 und in Fig. 5 mit dem Auflager 2 verbunden ist, spielen durch die Flüssigkeitskühlung 8 bei der Konstruktion des Federkörpers 3 und dessen Werkstoffauswahl praktisch keine Rolle. Nur dadurch lässt sich sicherstellen, dass zum Beispiel auch komplizierte Federkörper 3 mit in allen Raumrichtungen unterschiedlichen Federraten durch gebundene Zwischenringe, Membranen und Rollbälge zur Anwendung gelangen können, ohne Kompromisse hinsichtlich der Dauerhaltbarkeit des Federkörpers 3 und dessen Festlegung an Traglager 1 und Auflager 2 eingehen zu müssen. Federkörper 3 aus elastomeren Werkstoffen genügen steigenden Komfort- und Akustikansprüchen.

Voraussetzung für die Verwendung von Federkörpern 3 aus elastomeren Werkstoffen in zunehmend gekapselten Motorräumen von Verbrennungskraftmaschinen ist, dass die elastomeren Werkstoffe keinesfalls Dauertemperaturen von mehr als 100 °C ausgesetzt sind. Um das zuverlässig sicherzustellen, ist die Flüssigkeitskühlung 8 vorgesehen, die dafür sorgt, dass im Aggregatelager alle Teile aus elastomeren Werkstoffen unterhalb dieser kritischen Temperatur betrieben werden.

Das erfindungsgemäße Aggregatelager ist vor Wärme infolge von Strahlung, heißer Luft vom Motor und besonders der Abgasanlage einschließlich des Abgasturboladers geschützt. Der vor einer unerwünscht hohen Temperaturbeaufschlagung geschützte elastomere Federkörper 3 verhärtet durch die Flüssigkeitskühlung 8 dynamisch weniger und ist auch dauerhaltbar. Durch diese geringere Verhärtung wird die Isolationswirkung des Aggregatelagers gegen Körperschall und Vibration zusätzlich verbessert. Das Langzeitsetzen des Aggregatelagers wird durch die Flüssigkeitskühlung 8 reduziert, und es ist nicht mehr erforderlich, teure und stabilisierende Elastomerkomponenten, die langfristig die Aggregatelager verhärten, einzusetzen.
Die dargestellten Aggregatelager werden bei Dauertemperaturen betrieben, die idealerweise ≤ 80 °C, maximal 90 °C sind.

In Fig. 1 ist ein erstes Ausführungsbeispiel des Aggregatelagers gezeigt.

Das Traglager 1 und das Auflager 2 bestehen aus einem metallischen Werkstoff, wobei das Auflager 2 mit dem Gehäuse 9 verbunden ist. Das Gehäuse 9 ist topfförmig ausgebildet und umschließt das Traglager 1 mit Abstand relativ schwingfähig. Um einen Wärmeeintrag ins Innere des Aggregatelagers durch den von dem Abstand gebildeten Spalt 10 zwischen Gehäuse 9 und Traglager 1 zu verhindern, ist der aus gummielastischem Silikon bestehende Schutzbalg 11 vorgesehen, der radial außenseitig mit dem Gehäuse 9 und radial innenseitig mit dem Traglager 1 dichtend verbunden ist. Der Schutzbalg 11 ist bis zu zumindest 150 °C temperaturbeständig.

Das Traglager 1 und das Gehäuse 9 sind in dem gezeigten Ausführungsbeispiel jeweils doppelwandig ausgebildet, wobei zwischen den doppelten Wänden 12, 13 des Traglagers 1 und den doppelten Wänden 14, 15 des Gehäuses 9 Kühlmittel 16, 17 zirkuliert. Die doppelten Wände 12, 13 des Traglagers 1 begrenzen die Kühlmittelkammer 18, die doppelten Wände 14, 15 des Auflagers 2 die Kühlmittelkammer 19.
Die Kühlmittelkammern 18, 19 sind zur jeweiligen Umgebung hin abgedichtet, wobei das Traglager 1 mit den beiden Kühlmittelanschlüssen 20, 21 und das Gehäuse 9 mit den beiden Kühlmittelanschlüssen 22, 23 versehen ist. Die Kühlmittelanschlüsse 20, 22 sind als Kühlmittelzulauf, die Kühlmittelanschlüsse 21, 23 als Kühlmittelablauf ausgebildet. Die Kühlmittelanschlüsse 20, 21; 22, 23 münden in die jeweiligen Kühlmittelkammern 18, 19 von Traglager 1 und Gehäuse 9.

Durch die Zirkulation des Kühlmittels 16, 17 durch die Kühlmittelkammern 18, 19 wird Wärme aus dem Inneren des Aggregatelagers aus der unmittelbaren Umgebung des Federkörpers 3 abtransportiert. Die Kühlmittelanschlüsse 20, 21; 22, 23 sind derart relativ zueinander positioniert, dass das Kühlmittel 16, 17 jeweils einen möglichst langen Weg durch die Kühlmittelkammern 18, 19 zurücklegt. Durch diesen langen Weg wird möglichst viel Wärme aufgenommen und abtransportiert. Damit wird verhindert, dass die Wärme aus der Umgebung des Aggregatelagers und/oder über den hier nicht dargestellten Motortragarm, der mit dem Traglager 1 verbunden ist, an die Anbindungsflächen 6, 7 des Federkörpers 3 gelangt und die Befestigung des Federkörpers 3 oder diesen selbst schädigt oder zerstört.

Das Besondere an diesem Aggregatelager ist, dass nicht nur der Federkörper 3 durch die Flüssigkeitskühlung 8 vor einer unerwünscht hohen Wärmebeaufschlagung geschützt ist, sondern ebenfalls die anderen Elastomerteile, die durch die Membran 33 innerhalb des Düsenkäfigs 30 und die Abschlussmembran 35 gebildet sind. Das Gehäuse 9 umfasst einen doppelwandig ausgebildeten Deckel 41, der ebenfalls vom Kühlmittel 17 durchströmt ist. Die Kühlmittelkammer 19 ist bis in den Deckel 41 fortgesetzt und bildet einen Bestandteil des Kühlkreislaufs durch das Gehäuse 9.

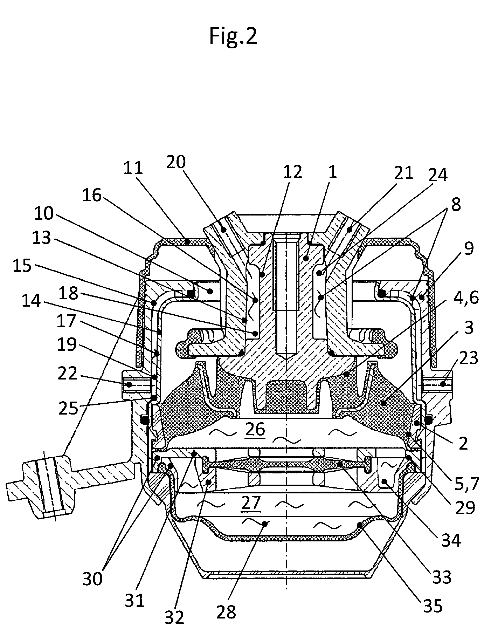

In Fig. 2 ist ein zweites Ausführungsbeispiel eines Aggregatelagers gezeigt, das sich vom Aggregatelager aus Fig. 1 im Wesentlichen dadurch unterscheidet, dass auf den Deckel 41 und damit auf ein Maximum an Kühlung durch die Flüssigkeitskühlung 8 zugunsten einer einfacheren und kostengünstigeren Herstellbarkeit des Aggregatelagers bewusst verzichtet wurde.

Die Flüssigkeitskühlung 8 umfasst, genau wie beim Aggregatelager aus Fig. 1, zwei Kühlkreisläufe und zwei Kühlmittelkammern 18, 19, wobei die Kühlmittelkammer 18 des Traglagers 1 die Kühlmittelanschlüsse 20, 21 und die Kühlmittelkammer 19 des Gehäuses 9 die Kühlmittelanschlüsse 22, 23 aufweist.

In den Kühlmittelkammern 18, 19 sind, genauso wie im Ausführungsbeispiel aus Fig. 1, Stützrippen 24, 25 vorgesehen, die einerseits die Kühlmittelkammern 18, 19 aussteifen und andererseits das Kühlmittel 16, 17 in den jeweiligen Kühlmittelkammern 18, 19 führen.

Die Kühlung der Anbindungsflächen 6, 7 des Federkörpers 3 und des Federkörpers 3 selbst unterscheidet sich von der entsprechenden Kühlung des Aggregatelagers aus Fig. 1 nicht.

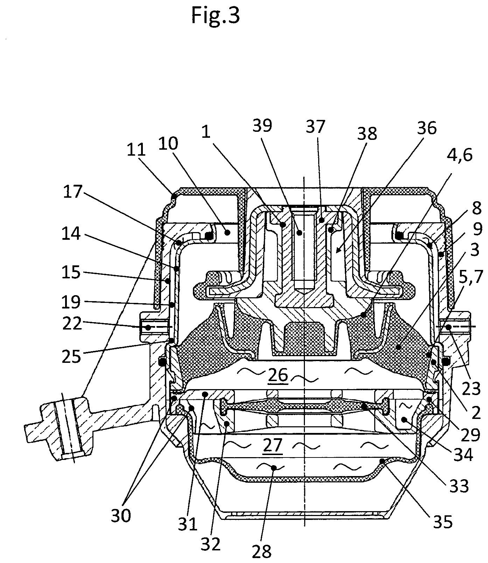

In Fig. 3 ist ein drittes Ausführungsbeispiel eines Aggregatelagers ähnlich dem Ausführungsbeispiel aus Fig. 2 gezeigt. Das Ausführungsbeispiel aus Fig. 3 unterscheidet sich im Wesentlichen von dem Ausführungsbeispiel aus Fig. 2 durch ein abweichend gestaltetes Traglager 1. Im Gegensatz zum Traglager 1 aus Fig. 2, das aus einem metallischen Werkstoff besteht, ist das Traglager 1 aus Fig. 3 durch ein Verbundgussteil 36 gebildet. Das Verbundgussteil 36 umfasst dabei die metallische Mutter 37, die von der Außenschale 38, die aus einem polymeren Werkstoff besteht, zur Begrenzung der Kühlmittelkammer 18 umschlossen ist. Die metallische Mutter 37 ist als Eingießmutter 39 ausgebildet. Die metallische Mutter 37 ist von polymerem Werkstoff umspritzt. Dieser polymere Werkstoff sorgt für eine Wärmeisolation der metallischen Mutter 37 gegenüber dem Federkörper 3. Die erste Anbindungsfläche 4 des Traglagers 1 besteht aus einem polymeren Werkstoff, an dem die dritte Anbindungsfläche 6 des Federkörpers 3 festgelegt ist.
Auch wenn der Motortragarm der abgestützten Verbrennungskraftmaschine hohe Temperaturen aufweist und unmittelbar mit der metallischen Mutter 37 verschraubt ist, überträgt sich die hohe Temperatur des Motortragarms durch die Außenschale 38 aus polymerem Werkstoff nicht in kritischem Maße in Richtung des Federkörpers 3 und dessen dritter Anbindungsfläche 6.
Ein solches Aggregatelager hat nur ein isoliertes Traglager 1 ohne Kühlmittelanschluss. Dadurch baut das Aggregatelager kleiner. Es benötigt keine zusätzliche Bauhöhe für den Kühlmittelanschluss.

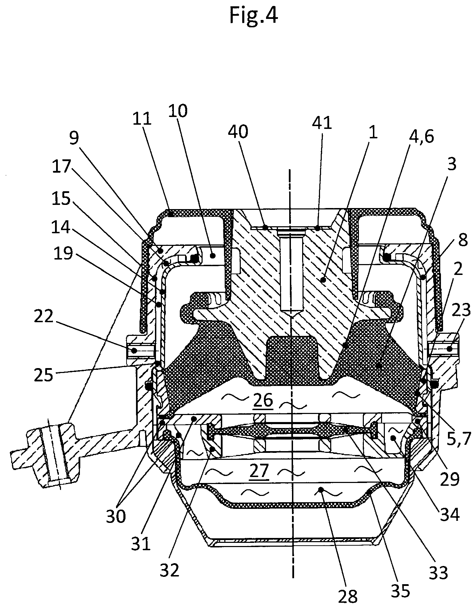

In Fig. 4 ist ein viertes Ausführungsbeispiel eines Aggregatelagers gezeigt, ähnlich dem Ausführungsbeispiel aus Fig. 3. Abweichend besteht hier das Traglager 1 vollständig aus einem metallischen Werkstoff. Um zu verhindern, dass sich das Traglager 1 in unerwünscht hohem Maße erwärmt und dadurch den Federkörper 3 und/oder dessen dritte Anbindungsfläche 6 schädigt, ist es in diesem Ausführungsbeispiel vorgesehen, dass das als metallische Mutter 37 ausgebildete Traglager 1 eine Wärmeisolationsscheibe 40 umfasst, die als Unterlage für eine zur Anwendung gelangende Befestigungsschraube vorgesehen ist. Mit einer solchen Befestigungsschraube kann der hier nicht dargestellte Motortragarm einer Verbrennungskraftmaschine mit dem Traglager 1 verbunden werden. Die Wärmeisolationsscheibe 40 besteht in dem hier gezeigten Ausführungsbeispiel aus einer Glimmerscheibe 41, wobei die Glimmerscheibe 41 eine Dicke von 1 mm bis 3 mm aufweist.
Ein solches Aggregatelager ist besonders einfach und kostengünstig herstellbar. Durch die einfach herstellbare und einfach zu montierende Glimmerscheibe 41 wird auf einfachste Art und Weise eine unerwünscht hohe Erwärmung des Traglagers 1 durch hohe Umgebungstemperaturen des Aggregatelagers und/oder hohe Temperaturen des Motortragarms verhindert.

In Fig. 5 ist ein fünftes Ausführungsbeispiel eines Aggregatelagers gezeigt. Das Aggregatelager unterscheidet sich von den zuvor beschriebenen Ausführungsbeispielen durch seine Upside-Down-Gestalt. Das Traglager 1 ist in diesem Fall mit der Karosserie eines Kraftfahrzeugs verbunden, der hier nicht dargestellte Motortragarm mit dem Auflager 2.

Die Flüssigkeitskühlung 8 bewirkt eine Kühlung des Auflagers 2, des Federkörpers 3 und dessen vierter Anbindungsfläche 7, die an die zweite Anbindungsfläche 5 des Auflagers 2 grenzt.

Ähnlich wie im Ausführungsbeispiel von Fig. 1 erstreckt sich die Kühlmittelkammer 19, die durch die doppelten Wände 14, 15 begrenzt und mit dem Kühlmittel 17 gefüllt ist, bis in den Deckel 41, wobei in diesem Ausführungsbeispiel der Deckel 41 die Kühlmittelanschlüsse 22, 23 aufweist, die einen Kühlmittelzulauf und einen Kühlmittelablauf bilden.

Die Kühlung des Federkörpers 3 und der dritten Anbindungsfläche 6 des Federkörpers 3 erfolgt durch den Luftstrom, der während der Fahrt des Fahrzeugs unter dem Fahrzeug hindurchströmt und dadurch Kühlung erzeugt.

Sollte die Kühlung durch den Fahrtwind im Fahrbetrieb nicht ausreichen, kann auch ein Aggregatelager gemäß Fig. 1, das upside-down montiert wird, vorgesehen werden.

Bei der gezeigten Upside-Down-Einbaulage wird die größte Wärmebelastung der Tragfeder 1 durch die warme Luft des Motorraums oder durch Wärmestrahlung der Abgasanlage erzeugt, so dass sich der Federkörper 3 auf der abgewandten Seite befindet. Der Bereich des Deckels 41 dagegen muss sehr gut gekühlt werden, da dieser den zuvor beschriebenen Wärmequellen direkt ausgesetzt ist und zusätzlich durch den Motortragarm Wärme zugleitet bekommt.
Für eine verbesserte Kühlung ist auch in diesem Ausführungsbeispiel ein Schutzbalg 11 vorgesehen, der aus Silikon besteht.

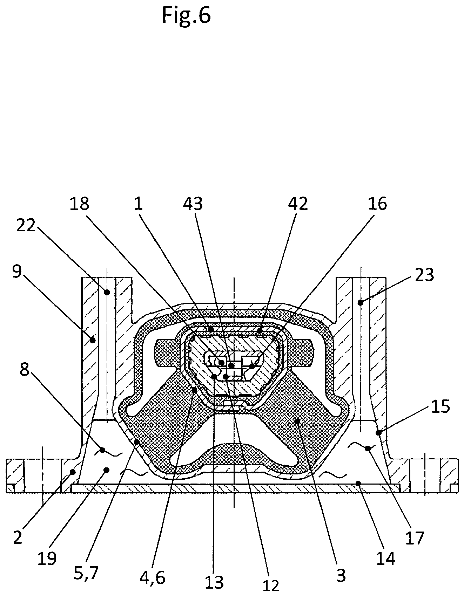

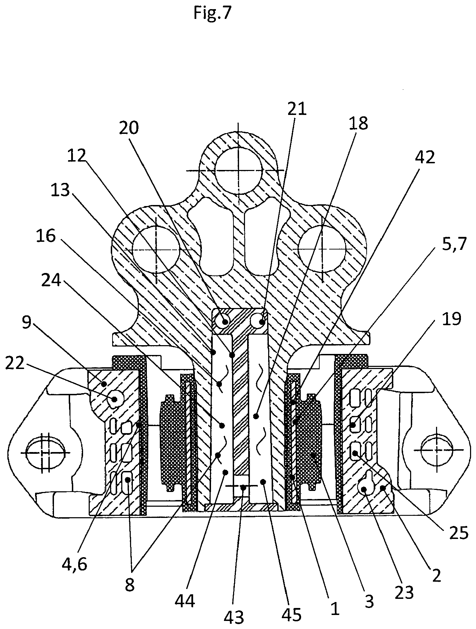

In den Fig. 6 und 7 ist ein gekühltes Gummi-Metall-Kastenlager gezeigt, das, im Gegensatz zu den Aggregatelagern aus den Figuren 1 bis 5, nicht als Hydrolager ausgebildet ist. Reine Gummi-Metalllager sind besonders kritisch hinsichtlich der Wärmebelastung, weil eine Fluidfüllung, wie beispielsweise bei einem Hydrolager, fehlt. Eine Kühlung ist deshalb speziell bei diesen Lagern besonders notwendig.

Die Flüssigkeitskühlung 8 erfolgt derart, dass das Traglager 1 und das Gehäuse 9 flüssigkeitsgekühlt werden, um eine kritische Temperaturbelastung des Federkörpers 3 und dessen Anbindungsflächen 6, 7 zu verhindern.

Um Gewicht zu sparen, weisen Gehäuse 9 eines Kastenlagers häufig Hohlräume auf, die gut zur Kühlung verwendet werden können. Ohnehin vorhandene Hohlräume bilden dann die mit dem Kühlmittel 16, 17 gefüllten Kühlmittelkammern 18, 19, durch die die Flüssigkeitskühlung 8 gebildet ist. Auch hier verlaufen die Kühlmittelkammern 18, 19 von Traglager 1 und Gehäuse 9 derart, dass insbesondere die dritte 6 und vierte Anbindungsfläche 7 des Federkörpers 3 gut gekühlt ist, damit der elastomere Werkstoff des Federkörpers 3 vor hohen Temperaturen gut geschützt ist.

In Fig. 6 ist die Kühlung des Gehäuses 9 des Kastenlagers dargestellt.

Fig. 7 zeigt die Kühlung des Traglagers 1 des Kastenlagers.

Bei kastenförmigen Lagern, die besonders oft bei Frontantriebsfahrzeugen mit quer eingebautem Motor verwendet werden, wird das Traglager 1 in einen Lagerkern 42 des Federkörpers 3 auf einem Gummibett eingepresst. Die Lagerkerne 42 sind vergleichsweise dünnwandig gestaltet, so dass dort aus Bauraumgründen eine Flüssigkeitskühlung 8 keinen Platz findet.

Da die Wärme zum Teil über das Traglager 1 in den Lagerkern 42 geleitet wird und dort oft Hohlräume sind, um Gewicht zu sparen, kann dort die Flüssigkeitskühlung 8 vorgesehen werden. Das Kühlmittel 16 durchströmt dann diese Hohlräume, die von der Kühlmittelkammer 18 begrenzt sind.

Der Hohlraum enthält ein Einsteckteil aus Kunststoff und/oder hartem Gummi, das den Hohlraum in zwei Teile zur gezielten Führung des Kühlmittels 16 unterteilt und am Ende den Hohlraum verschließt. Eine Querbohrung 43 am Stopfen sorgt für den Übertritt des Kühlmittels 16 von der Hinströmung 44 zur Rückströmung 45 und damit für den Kühlkreislauf.

Eine bessere Wirksamkeit der Kühlung kann mit einer hier nicht dargestellten Schutzkappe aus EPDM oder Silikon erreicht werden, die einen gekühlten Raum um das Aggregatelager bildet und Konvektion warmer Luft aus dem Motorraum von dem Federkörper 3 fernhält.

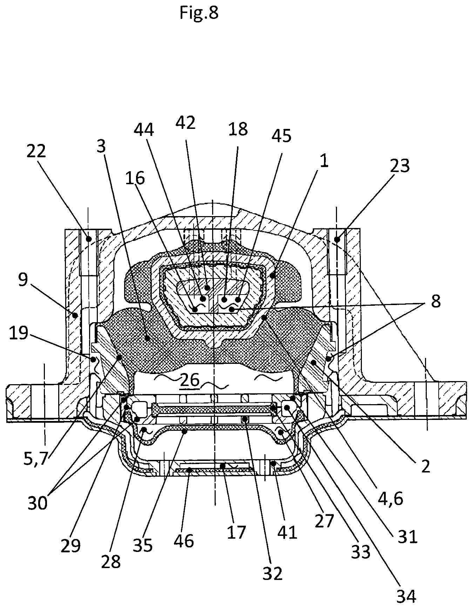

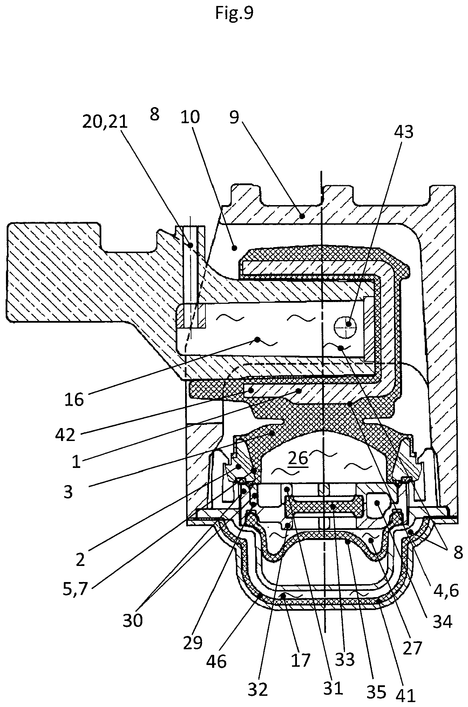

In den Fig. 8 und 9 ist ein siebtes Ausführungsbeispiel eines Aggregatelagers gezeigt. Das Aggregatelager ist in diesem Fall als gekühltes hydraulisches Kastenlager ausgebildet.

Hydraulische Kastenlager müssen den Bauraumbedingungen genügen, wobei auf den Fahrzeuglängsträgern bei quer eingebauten Motoren im Fahrzeug wenig Platz in der Fahrzeugbreite besteht. Daher ist für seitliche Flüssigkeitsströmungen kein Bauraum vorhanden. Diese muss von vorne nach hinten oder umgekehrt erfolgen, um die dritte und vierte Anbindungsfläche 6, 7 des Federkörpers 3 zu kühlen. Die Kühlung des Traglagers 1 kann im Wesentlichen erfolgen, wie zuvor im sechsten Ausführungsbeispiel der Fig. 6 und 7 beschrieben.

Die Kühlung des Gehäuses 9 erfolgt über die schmalen Seiten des Lagers. Das Gehäuse 9 weist die Kühlmittelanschlüsse 22, 23 auf, wobei der Kühlmittelanschluss 22 als Kühlmittelzulauf und der Kühlmittelanschluss 23 als Kühlmittelablauf ausgebildet ist. Die Kühlmittelanschlüsse 22, 23 münden in die Kühlmittelkammer 19 des Gehäuses 9.

Auch in diesem Ausführungsbeispiel ist ein Deckel 41 vorgesehen, wie bei den Aggregatelagern in den Fig. 1 und 5, der doppelwandig ausgebildet ist und die Führung des Kühlmittels von einer schmalen Seite zur anderen übernimmt. Dadurch wird die vierte Anbindungsfläche 7 des Federkörpers 3 gekühlt.
Der Deckel 41 besteht aus Stahlblech. Der Deckel 41 kann in einem Vulkanisationsvorgang mit einem Gummiüberzug 46 versehen werden, der alle Dichtungen enthält, wodurch die Montage wesentlich vereinfacht ist.

Das Traglager 1 wird durch eine innere Kühlung von Wärmeeinflüssen durch den Motortragarm abgekoppelt, genauso wie beim Gummi-Metall-Kastenlager aus den Fig. 6 und 7. Im Traglager 1 sind Hohlräume vorgesehen, wobei einer der Hohlräume durch ein Einsteckteil mit einer Querbohrung 43 so geteilt wird, dass das Kühlmittel 16 das Traglager 1 in seiner ganzen Länge in einem Kreislauf durchströmt. Damit wird eine sehr große Fläche des Traglagers 1 benetzt und eine gleichmäßige Kühlung ermöglicht.

Ebenso wie zuvor im Zusammenhang mit dem Aggregatelager aus den Fig. 6 und 7 beschrieben, kann die Wirksamkeit der Kühlung weiter erhöht werden, wenn eine Schutzkappe über dem Aggregatelager vorgesehen wird, die die offenen seitlichen Flächen verschließt und damit vor einer Beaufschlagung mit hohen Temperaturen aus der Umgebung schützt. Dann wird verhindert, dass warme Luft aus dem Motorraum die freiliegenden Oberflächen des Federkörpers 3 aufheizen kann. Gleichzeitig wird damit verhindert, dass gekühlte Luft aus dem Inneren des Aggregatelagers zur Umgebung hin abfließt.

## Patentansprüche

1. Aggregatelager, umfassend ein Traglager (1), ein Auflager (2) und einen Federkörper (3) aus einem gummielastischen Werkstoff, wobei das Traglager (1) zumindest eine erste Anbindungsfläche (4), das Auflager (2) zumindest eine zweite Anbindungsfläche (5) und der Federkörper (3) zumindest eine dritte (6) und zumindest eine vierte Anbindungsfläche (7) aufweisen, wobei die erste Anbindungsfläche (4) des Traglagers (1) mit der dritten Anbindungsfläche (6) des Federkörpers (3) und die zweite Anbindungsfläche (5) des Auflagers (2) mit der vierten Anbindungsfläche (7) des Federkörpers (3) verbunden sind, wobei das Auflager (2) mit einem Gehäuse (9) verbunden ist, wobei das Gehäuse (9) topfförmig ausgebildet ist und das Traglager (1) mit Abstand relativ schwingfähig umschließt, **dadurch gekennzeichnet, dass** die erste Anbindungsfläche (4) des Traglagers (1) und die dritte Anbindungsfläche (6) des Federkörpers (3) und/oder die zweite Anbindungsfläche (5) des Auflagers (2) und die vierte Anbindungsfläche (7) des Federkörpers (3) durch eine Flüssigkeitskühlung (8) flüssigkeitsgekühlt ausgebildet sind, dass das Traglager (1) und/oder das Gehäuse (9) doppelwandig ausgebildet sind, und wobei die doppelten Wände (12, 13; 14, 15) eine mit einem Kühlmittel (16, 17) gefüllte Kühlmittelkammer (18, 19) begrenzen, durch die die Flüssigkeitskühlung (8) gebildet ist, dass das Traglager (1) und/oder das Gehäuse (9) jeweils zwei Kühlmittelanschlüsse (20, 21; 22, 23) aufweisen, dass einer der Kühlmittelanschlüsse (20, 22) als Kühlmittelzulauf und einer der Kühlmittelanschlüsse (21, 23) als Kühlmittelablauf ausgebildet ist und dass die Kühlmittelanschlüsse (20, 21; 22, 23) in die Kühlmittelkammer (18, 19) von Traglager (1) und/oder Gehäuse (9) münden und dass innerhalb der Kühlmittelkammern (18, 19) Stützrippen (24, 25) zu deren Aussteifung und zur Führung des Kühlmittels (16, 17) angeordnet sind.

2. Aggregatelager nach Anspruch 1, **dadurch gekennzeichnet, dass** das Traglager (1) und das Auflager (2) aus einem metallischen Werkstoff bestehen.

3. Aggregatelager nach Anspruch 1 oder 2, **dadurch gekennzeichnet, dass** der durch den Abstand gebildete Spalt (10) von einem Schutzbalg (11) überdeckt ist und dass der Schutzbalg (11) das Traglager (1) und das Gehäuse (9) dichtend anliegend berührt.

4. Aggregatelager nach Anspruch 3, **dadurch gekennzeichnet, dass** der Schutzbalg (11) aus einem gummielastischen Werkstoff, der bis zu zumindest 150 °C temperaturbeständig ist, besteht.

5. Aggregatelager nach einem der Ansprüche 3 oder 4, **dadurch gekennzeichnet, dass** der Schutzbalg (11) aus Silikon oder EPDM mit hellgrauem Füllstoff besteht.

6. Aggregatelager nach einem der Ansprüche 1 bis 5, **dadurch gekennzeichnet, dass** die Kühlmittelkammern (18, 19) von Traglager (1) und/oder Gehäuse (9) kontinuierlich vom Kühlmittel (16, 17) durchströmbar sind.

7. Aggregatelager nach einem der Ansprüche 1 bis 6, **dadurch gekennzeichnet, dass** dieses als Hydrolager ausgebildet ist.

8. Aggregatelager nach einem der Ansprüche 1 bis 7, **dadurch gekennzeichnet, dass** das Traglager (1), das Auflager (2) und der Federkörper (3) einen Arbeitsraum (26) und einen Ausgleichsraum (27) begrenzen, die mit Dämpfungsflüssigkeit (28) gefüllt sind und die durch eine Trennwand (29) räumlich voneinander getrennt und flüssigkeitsleitend miteinander verbunden sind, dass die Trennwand (29) durch einen Düsenkäfig (30) mit oberer (31) und unterer Düsenscheibe (32) gebildet ist, dass zur Isolierung höherfrequenter kleinamplitudiger Schwingungen im Düsenkäfig (30) axial zwischen den Düsenscheiben (31, 32) eine Membran (33) schwingfähig angeordnet ist, dass der Arbeitsraum (26) und der Ausgleichsraum (27) zur Dämpfung tieffrequenter großamplitudiger Schwingungen durch einen Dämpfungskanal (34) flüssigkeitsleitend miteinander verbunden sind und dass der Ausgleichsraum (27) auf der der Trennwand (29) axial abgewandten Seite durch eine im Wesentlichen drucklos Volumen aufnehmende gummielastische Abschlussmembran (35) begrenzt ist.

9. Aggregatelager nach einem der Ansprüche 1 bis 8, **dadurch gekennzeichnet, dass** das Traglager (1) und/oder das Auflager (2) durch ein Verbundgussteil (36) gebildet sind.

10. Aggregatelager nach einem der Ansprüche 1 bis 9, **dadurch gekennzeichnet, dass** das Traglager eine metallische Mutter (37) umfasst, die von einer Außenschale (38) zur Begrenzung der Kühlmittelkammer (18) umschlossen ist, wobei die Außenschale (38) aus einem polymeren Werkstoff besteht.

11. Aggregatelager nach Anspruch 10, **dadurch gekennzeichnet, dass** die metallische Mutter (37) als Eingießmutter (39) ausgebildet ist.

12. Aggregatelager nach einem der Ansprüche 10 oder 11, **dadurch gekennzeichnet, dass** die Mutter (37) von einer Wärmeisolationsscheibe (40) als Unterlage für eine zur Anwendung gelangende Befestigungsschraube überdeckt ist.

13. Aggregatelager nach Anspruch 12, **dadurch gekennzeichnet, dass** die Wärmeisolationsschreibe (40) als Glimmerscheibe (41) ausgebildet ist.

## Claims

1. An aggregate mount comprising a support mount (1), a support (2) and a spring body (3) made of a rubber-elastic material, the support mount (1) having at least a first connecting surface (4), the support (2) having at least a second connecting surface (5) and the spring body (3) having at least a third (6) connecting surface and at least a fourth connecting surface (7), wherein the first connecting surface (4) of the support mount (1) is connected to the third connecting surface (6) of the spring body (3) and the second connecting surface (5) of the support (2) is connected to the fourth connecting surface (7) of the spring body (3), wherein the support (2) is connected to a housing (9), wherein the housing (9) is of cup-shaped construction and encloses the support mount (1) in a relatively vibratable manner at a distance, **characterised in that** the first connecting surface (4) of the support mount (1) and the third connecting surface (6) of the spring body (3) and/or the second connecting surface (5) of the support (2) and the fourth connecting surface (7) of the spring body (3) are liquid-cooled by a liquid cooling system (8), **in that** the support mount (1) and/or the housing (9) are of a double-walled design, the double walls (12, 13; 14, 15) delimiting a coolant chamber (18, 19) filled with a coolant (16, 17) through which the liquid cooling (8) is formed, **in that** the supporting mount (1) and/or the housing (9) each have two coolant connections (20, 21; 22, 23), **in that** one of the coolant connections (20, 22) is designed as a coolant supply and one of the coolant connections (21, 23) is designed as a coolant drain, and **in that** the coolant connections (20, 21; 22, 23) lead into the coolant chamber (18, 19) of the support mount (1) and/or the housing (9), and **in that** within the coolant chamber (18, 19) support ribs (24, 25) are arranged for reinforcing the coolant chamber (18, 19) and for guiding the coolant (16, 17).

2. Aggregate mount according to claim 1, **characterized in that** the support mount (1) and the support (2) consist of a metallic material.

3. Aggregate mount according to claim 1 or 2, **characterized in that** the gap (10) formed by the distance is covered by a protective bellows (11) and that the protective bellows (11) contacts the support mount (1) and the housing (9) in a sealing manner.

4. Aggregate mount according to claim 3, **characterized in that** the protective bellows (11) consists of a rubber-elastic material which is temperature-resistant up to at least 150° C.

5. Aggregate mount according to claim 3 or 4, **characterized in that** the protective bellows (11) consists of silicone or EPDM with a light-grey filler.

6. Aggregate mount according to any one of claims 1 to 5, **characterized in that** the coolant chambers (18, 19) of the support mount (1) and/or the housing (9) can be continuously flown through by the coolant (16, 17).

7. Aggregate mount according to any one of claims 1 to 6, **characterized in that** it is designed as a hydro-mount.

8. Aggregate mount according to any one of claims 1 to 7, **characterized in that** the support mount (1), the support (2) and the spring body (3) define a working space (26) and an equalizing space (27) which are filled with damping fluid (28) and which are spatially separated from one another by a partition wall (29) and are connected to one another in a liquid-conducting manner, **in that** the partition wall (29) is provided with a nozzle cage (30) with an upper nozzle disc (31) and a lower nozzle disc (32), **in that** a diaphragm (33) is arranged axially between the nozzle discs (31, 32) in an oscillatable manner to isolate higher-frequency small amplitude vibrations in the nozzle cage (30), **in that** the working chamber (26) and the compensating chamber (27) for damping low-frequency large amplitude vibrations are connected to one another in a fluid-conducting manner by means of a damping channel (34), and **in that** the compensating chamber (27) on the side axially facing away from the partition wall (29) is delimited by a rubber-elastic closure diaphragm (35) which receives substantially pressureless volume.

9. Aggregate mount according to any one of claims 1 to 8, **characterized in that** the support mount (1) and/or the support (2) are formed by a composite casting (36).

10. Aggregate mount according to any one of claims 1 to 9, **characterized in that** the support mount comprises a metallic nut (37) which is enclosed by an outer shell (38) for delimiting the coolant chamber (18), the outer shell (38) consisting of a polymeric material.

11. Aggregate mount according to claim 10, **characterized in that** the metallic nut (37) is designed as a casting nut (39).

12. Aggregate mount according to claim 10 or 11, **characterized in that** the nut (37) is covered by a thermal insulation washer (40) as a support for a fastening screw to be used.

13. Aggregate mount according to claim 12, **characterized in that** the thermal insulation washer (40) is designed as a mica disc (41).

## Revendications

1. Support de groupe, comprenant un palier d'appui (1), un coussinet (2) et un corps de ressort (3) en un matériau élastique,
dans lequel le palier d'appui (1) comporte au moins une première surface de liaison (4), le coussinet (2) au moins une deuxième surface de liaison (5) et le corps de ressort (3) au moins une troisième (6) et au moins une quatrième (7) surface de liaison,
dans lequel la première surface de liaison (4) du palier d'appui (1) est reliée à la troisième surface de liaison (6) du corps de ressort (3) et la deuxième surface de liaison (5) du coussinet (2) est reliée à la quatrième surface de liaison (7) du corps de ressort (3),
dans lequel le coussinet (2) est relié à un boîtier (9),
dans lequel le boîtier (9) est réalisé en forme de pot et entoure le palier d'appui (1) à une certaine distance et de manière à pouvoir relativement bien osciller,
**caractérisé en ce que** la première surface de liaison (4) du palier d'appui (1) et la troisième surface de liaison (6) du corps de ressort (3) et/ou la deuxième surface de liaison (5) du coussinet (2) et la quatrième surface de liaison (7) du corps de ressort (3) sont réalisées de manière à être refroidies par un fluide par un refroidissement par fluide (8),
**en ce que** le palier d'appui (1) et/ou le boîtier (9) sont réalisés à double paroi, et
**en ce que** les doubles parois (12, 13 ; 14, 15) délimitent une chambre de fluide de refroidissement (18, 19) qui est remplie d'un fluide de refroidissement (16, 17), par laquelle le refroidissement par fluide (8) est formé,
**en ce que** le palier d'appui (1) et/ou le boîtier (9) comportent chacun deux raccords de fluide de refroidissement (20, 21 ; 22, 23),
**en ce que** l'un des raccords de fluide de refroidissement (20, 22) est réalisé comme une admission de fluide de refroidissement et l'un des raccords de fluide de refroidissement (21, 23) est réalisé comme une évacuation de fluide de refroidissement et
**en ce que** les raccords de fluide de refroidissement (20, 21 ; 22, 23) débouchent dans la chambre de fluide de refroidissement (18, 19) du palier d'appui (1) et/ou du boîtier (9) et
**en ce que** des nervures de soutien (24, 25) sont agencées à l'intérieur des chambres de fluide de refroidissement (18, 19) afin de les rigidifier et de guider le fluide de refroidissement (16, 17).

2. Support de groupe selon la revendication 1, **caractérisé en ce que** le palier d'appui (1) et le coussinet (2) sont en un matériau métallique.

3. Support de groupe selon la revendication 1 ou 2, **caractérisé en ce que** la fente (10) formée par la distance est recouverte par un soufflet protecteur (11) et **en ce que** le soufflet protecteur (11) est en contact étanche avec le palier d'appui (1) et le boîtier (9).

4. Support de groupe selon la revendication 3, **caractérisé en ce que** le soufflet protecteur (11) est en un matériau élastique qui est résistant à une température allant jusqu'à 150 °C au moins.

5. Support de groupe selon l'une quelconque des revendications 3 ou 4, **caractérisé en ce que** le soufflet protecteur (11) est en silicone ou en EPDM avec matière de remplissage gris clair.

6. Support de groupe selon l'une quelconque des revendications 1 à 5, **caractérisé en ce que** les chambres de fluide de refroidissement (18, 19) du palier d'appui (1) et/ou du boîtier (9) peuvent être traversées en continu par le fluide de refroidissement (16, 17).

7. Support de groupe selon l'une quelconque des revendications 1 à 6, **caractérisé en ce qu'**il est réalisé comme un palier hydraulique.

8. Support de groupe selon l'une quelconque des revendications 1 à 7, **caractérisé**
**en ce que** le palier d'appui (1), le coussinet (2) et le corps de ressort (3) délimitent un espace de travail (26) et un espace de compensation (27) qui sont remplis avec un fluide amortisseur (28) et qui sont séparés l'un de l'autre spatialement par une paroi séparatrice (29) et reliés l'un à l'autre pour conduire le fluide,
**en ce que** la paroi séparatrice (29) est formée par une cage de buse (30) avec un disque de buse supérieur (31) et un disque de buse inférieur (32),
**en ce que**, en vue de l'isolation d'oscillations de haute fréquence et de petite amplitude dans la cage de buse (30), une membrane (33) est agencée de façon axiale entre les disques de buse (31, 32) de manière à pouvoir osciller,
**en ce que** l'espace de travail (26) et l'espace de compensation (27) sont reliés l'un à l'autre de manière à conduire le fluide par un canal d'amortissement (34) afin d'amortir des oscillations de basse fréquence et de grande amplitude
et **en ce que** l'espace de compensation (27) est délimité, du côté de façon axiale éloigné de la paroi séparatrice (29), par une membrane d'obturation (35) élastique recevant un volume globalement sans pression.

9. Support de groupe selon l'une quelconque des revendications 1 à 8, **caractérisé en ce que** le palier d'appui (1) et/ou le coussinet (2) sont formés par une pièce de fonte composite (36).

10. Support de groupe selon l'une quelconque des revendications 1 à 9, **caractérisé en ce que** le palier d'appui comprend un écrou métallique (37) qui est entouré par une coque extérieure (38) afin de limiter la chambre de fluide de refroidissement (18), la coque extérieure (38) étant en un matériau polymère.

11. Support de groupe selon la revendication 10, **caractérisé en ce que** l'écrou métallique (37) est réalisé comme un écrou intégré (39).

12. Support de groupe selon l'une quelconque des revendications 10 ou 11, **caractérisé en ce que** l'écrou (37) est recouvert par un disque d'isolation thermique (40) comme base pour une vis de fixation utilisée.

13. Support de groupe selon la revendication 12, **caractérisé en ce que** le disque d'isolation thermique (40) est réalisé comme un disque de mica (41).
